# FASCICULE DE BREVET EUROPEEN

(11) **EP 2 812 981 B1**
(45) Date de publication et mention de la délivrance du brevet: **01.07.2020**
(21) Numéro de dépôt: 13706599.1
(22) Date de dépôt: 31.01.2013
(51) Int. Cl.: H02K 1/14, H02K 1/18, H02K 1/20, H02K 5/22

(54) **MACHINE ÉLECTRIQUE PRÉSENTANT UNE STRUCTURE STATORIQUE MODULAIRE**
ELEKTRISCHE MASCHINE MIT MODULARER STATORSTRUKTUR
ELECTRICAL MACHINE HAVING A MODULAR STATOR STRUCTURE

(30) Priorité: 02.02.2012 FR 1251003
(43) Date de publication de la demande: 17.12.2014
(73) Titulaire: Novatem, 11110 Coursan (FR)
(72) Inventeur: NOGAREDE, Bertrand, F-11110 Coursan (FR)
(74) Mandataire: Cabinet Laurent & Charras
(86) Numéro de dépôt international: PCT/FR2013/050196
(87) Numéro de publication internationale: WO 2013/114043

(56) Documents cités:
- EP-A2- 1 209 796
- WO-A1-02/091547
- WO-A1-2011/074973
- DE-A1- 10 236 941
- DE-A1-102009 029 220
- GB-A- 2 334 628
- US-A1- 2010 007 236

## Description

### Domaine technique

L'invention se rattache au domaine de l'électrotechnique. Elle concerne plus particulièrement une structure de machine électrique, dont le stator comporte une pluralité de modules statoriques assemblés de manière équiangulaire sur un châssis.

Elle vise plus spécifiquement des agencements particuliers autorisant le montage des différents modules sur le châssis, en conservant l'entrefer à une valeur particulièrement réduite, tout en restant compatible avec des tolérances de fabrication concernant les dimensions des modules et les efforts subis en fonctionnement.

Dans la suite de la description, les directions axiale, radiale et orthoradiale seront définies en référence à l'axe de rotation du moteur.

### Techniques antérieures

Dans le domaine des moteurs électriques, des conceptions de stators modulaires ont déjà été proposées, dans le but de faciliter la fabrication et le montage d'un moteur, ainsi que sa maintenance.

Ainsi, on connaît par les documents EP 2 001 107, US 2009/0256430, US 2002/0125782 ou US 2005/0194845 des structures de stators qui sont réalisées par l'assemblage de modules statoriques qui sont disposés de manière équiangulaire sur un châssis. Chaque module porte un bobinage de sorte que l'ensemble des modules permet de générer soit un champ tournant, soit un champ dont la présence, la position et l'intensité peuvent être réglées pour interagir de façon appropriée avec le rotor.

Dans le cas de moteurs à réluctance variable, ce rotor possède une ou plusieurs zones proéminentes venant s'aligner avec le champ généré par un des modules. La commande appropriée de chacun des modules permet d'assurer la rotation du rotor.

Dans les structures connues à ce jour, et en particulier dans celles décrites dans les documents précités, chaque module statorique comporte un bobinage conducteur, qui est enroulé dans un plan orthoradial, de sorte qu'il crée un champ radial orienté selon la partie en saillie dirigée vers le rotor.

En d'autres termes, ce type de module comporte un pôle unique orienté vers le rotor, de sorte que le champ qu'il génère doit se refermer par le rotor, un ou plusieurs autres modules, ainsi que la carcasse du stator, qui doit donc présenter des propriétés ferromagnétiques.

On conçoit que ce type de structure impose des contraintes sur la manière dont l'ensemble du moteur est formé. Or, dans certains cas, on peut imaginer que ces contraintes ne sont pas compatibles avec des tolérances de fabrication, ou conduisent à des dégradations des performances et des coûts supplémentaires par des choix dimensionnels intégrant des marges de sécurité.

On connait également l'enseignement du document GB 2 334 628 qui présente un moteur ou générateur comprenant un rotor présentant des dentelures sur sa périphérie, tournant autour d'un axe de rotation à l'intérieur d'un stator formé d'une cavité cylindrique (châssis) apte à accueillir des modules statoriques répartis de manière équiangulaire. Les modules statoriques sont fixés au châssis par des éléments de maintien trapézoïdaux de forme complémentaire à celle des modules statoriques. Les éléments de maintien trapézoïdaux sont vissés au châssis au moyen de vis pénétrant dans un alésage des éléments de maintien trapézoïdaux. Un bobinage d'orientation est prévu pour générer un champ magnétique orthoradial. Chaque module statorique comporte deux pôles en regard du rotor, permettant de canaliser le champ de telle sorte que celui-ci se referme quasi-uniquement par la portion du rotor en regard du module statorique concerné et sans interagir avec les modules statoriques voisins. Un blocage radial des modules statoriques est assuré par une coopération des pièces trapézoïdales et des flancs inclinés des modules statoriques.

Ainsi, ce dispositif présente des contraintes importantes pour assurer la dissipation thermique et la flexibilité mécanique des parois des éléments de maintien trapézoïdaux.

L'invention se propose donc de résoudre tout ou partie de ces différents problèmes.

### Exposé de l'invention

L'invention concerne une machine électrique, dont le stator comporte un châssis et une pluralité de modules statoriques répartis et pris angulairement sur ce châssis, chaque module portant un bobinage susceptible de générer un champ magnétique.

Conformément à l'invention chaque module statorique comporte :
▪ une portion centrale sur laquelle est enroulé orthoradialement le bobinage ;
▪ deux portions latérales formant chacune un pôle orienté vers le rotor.

Complémentairement, le châssis comporte une pluralité de parois radiales, coopérant avec les faces extérieures des portions latérales des modules statoriques, pour maintenir ces derniers en position.

La machine se caractérise en ce que les parois radiales comportent un évidement central s'étendant sur tout ou partie de leurs longueurs et en ce que les parois radiales offrent une bonne stabilité mécanique grâce à leur possibilité de déformation dans le sens orthoradial, la présence dudit évidement central garantissant une flexibilité mécanique et offrant un espace permettant à un fluide de circuler à l'intérieur des parois radiales.

En d'autres termes, l'invention concerne des modules statoriques dont le bobinage est enroulé autour d'un axe orthoradial et qui génère un champ, qui est orienté en direction du rotor grâce aux deux portions latérales de chaque module. L'invention consiste notamment à proposer un châssis dont les parois radiales offrent une bonne stabilité mécanique grâce à leur possible déformation par compression dans le sens orthoradial, et une bonne stabilité thermique grâce à la présence d'un évidement central garantissant à la fois une flexibilité mécanique et offrant un espace permettant à un fluide de circuler à l'intérieur des parois radiales.

La présence de deux pôles au sein d'un même module permet de générer un champ qui se referme quasi uniquement par la portion du rotor en regard du module concerné, sans cheminer par le reste des autres modules ou du châssis.

Ces différents modules sont enchâssés entre deux parois consécutives, et chaque module peut donc être extrait du moteur de façon indépendante.

Diverses dispositions peuvent être avantageusement adoptées pour assurer un maintien en position des modules par rapport au châssis en assurant le maintien de l'entrefer à un niveau très faible et surtout constant.

Ainsi, pour ce faire, les parois comportent au moins une zone en relief s'étendant axialement, coopérant avec une zone en relief complémentaire présente sur la face extérieure d'un module statorique. Autrement dit, les surfaces en regard du module et de la paroi ne sont pas planes, mais s'interpénètrent partiellement, pour empêcher tout mouvement du module statorique selon une direction radiale, de manière à maintenir l'entrefer à une valeur constante.

Ces zones en relief permettent également d'augmenter la surface de contact entre les parois et les modules statoriques, garantissant une meilleure dissipation de la chaleur depuis les modules statoriques vers les parois. Ceci contribue à assurer une meilleure stabilité thermique des modules statoriques.

La forme et le positionnement ainsi que le nombre des zones en relief peuvent varier en fonction des applications.

Ainsi, les zones en relief peuvent former des excroissances situées préférentiellement sur la paroi, auquel cas la face extérieure du module présente des zones en creux. Il est également envisageable d'adopter la configuration opposée.

Avantageusement en pratique, la zone en relief peut présenter une forme courbe. Une telle disposition est avantageuse pour la réalisation de modules statoriques à base de matériaux ferromagnétiques fabriqués à partir de poudre compressée.

Divers agencements peuvent être prévus au niveau des parois de maintien du module, pour assurer conjointement des fonctions de refroidissement et de compensation des tolérances de fabrication.

Ainsi, comme évoqué précédemment, les parois possèdent avantageusement une capacité de déformation par compression dans le sens orthoradial. Une telle propriété permet de compenser des tolérances de fabrication liées à la fabrication des modules. Elles permettent également d'insérer les modules en force, pour éviter tout mouvement ultérieur.

Les parois comportent également un évidement central, s'étendant sur toute ou partie de leur longueur. Un tel évidement permet de former un canal dans lequel peut circuler un fluide, gazeux ou liquide, permettant d'assurer le refroidissement du moteur. En effet, la source principale de chaleur est constituée par le bobinage, qui est thermiquement connecté au corps du module, qui est lui-même en contact direct avec les parois qui contiennent ce canal de ventilation. Ce principe de refroidissement est également avantageux vis-à-vis de l'extraction des pertes d'origine magnétique dissipées au sein même du matériau ferromagnétique constituant le module, sous l'effet de la haute fréquence de variation du champ.

Dans une forme particulière de réalisation, l'évidement central peut se prolonger au-delà de la base de la paroi, à l'intérieur du châssis, de manière à augmenter encore les capacités d'échange calorifique.

La fonction de refroidissement grâce à cet évidement central peut se combiner avec une plus forte capacité de déformation, dans le cas où l'évidement est ouvert en direction de l'extrémité distale de la paroi, c'est-à-dire l'extrémité orientée vers le rotor. Dans ce cas, l'ouverture de cet évidement peut être comblée par un matériau compressible. Dans ces conditions, les mouvements engendrés par les efforts créés lors du fonctionnement du moteur, peuvent légèrement déformer la paroi en comprimant l'élément par exemple élastomérique qui bouche l'ouverture du canal de ventilation.

Selon d'autres aspects de l'invention, les modules statoriques peuvent être conçus de manière à améliorer les performances électromagnétiques du moteur.

Ainsi, avantageusement en pratique, les deux portions latérales du module statorique peuvent présenter leurs faces intérieures qui sont parallèles entre elles, et donc perpendiculaires à l'axe d'enroulement du bobinage. De cette manière, le logement à l'intérieur duquel est enroulé le bobinage présente une section rectangulaire, permettant un remplissage optimal par des machines de bobinage automatisé.

On préférera avantageusement que le bobinage vienne au contact direct des faces intérieures des portions latérales des modules, de manière à améliorer l'échange thermique avec le matériau magnétique du module statorique.

La configuration parallèle des faces internes des portions latérales des modules statoriques fait que les portions latérales présentent une section trapézoïdale, avec une petite base orientée vers le rotor, facilitant ainsi la saturation et la concentration du champ magnétique au niveau des zones ferromagnétiques en regard du rotor.

La conception modulaire du moteur et en particulier la présence de parois équipées de moyens de blocage s'étendant axialement permet également d'implanter les modules électroniques de contrôle/commande dans le châssis. Plus précisément, les modules de commande peuvent être maintenus en position entre les deux parois, en étant disposés en décalage axial par rapport au module statorique. Autrement dit, les modules de contrôle/commande électroniques sont disposés dans l'alignement du module statorique dans une partie du moteur situé dans le prolongement de la zone magnétique. Ceci permet en particulier d'utiliser un châssis de section constante fabriquée à partir de profilés, dont une partie reçoit le module statorique, et l'autre partie, les modules de contrôle/commande.

Dans cette configuration, il est aisé d'associer un module de contrôle/commande à un module statorique, pour obtenir une indépendance totale du module en termes de contrôle/commande, en particulier lorsque le module de contrôle/commande compte un capteur évaluant la position du rotor.

Dans une forme particulière de réalisation, chaque dispositif de contrôle/commande peut comporter une semelle au contact du châssis, cette semelle recevant les composants électroniques au travers desquels transite le courant circulant dans le bobinage du module statorique. Ainsi, par cette semelle métallique, la chaleur dégagée par ces composants électroniques de puissance est transférée vers le châssis, évitant ainsi une élévation trop importante de la température des composants électriques.

Différentes architectures peuvent être prévues pour le module de contrôle/commande, qui peuvent ainsi comporter au moins un circuit imprimé monté parallèlement, ou perpendiculairement à la face supérieure de la semelle, au contact du châssis.

Complémentairement, les parois peuvent avantageusement comporter un évidement spécifique accueillant des organes d'interconnexion électrique entre les modules magnétiques, les modules électroniques de contrôle/commande et le système externe d'alimentation et de commande.

Une telle machine peut accueillir diverses structures de rotor, fonctionnant sur un principe similaire dans lequel le champ créé par chaque module statorique se referme par la portion du rotor en regard. Il peut ainsi s'agir d'un rotor à pôles saillants, en matériau ferromagnétique, de manière à former ce qu'il est convenu d'appeler une machine à réluctance variable. Il peut également s'agir d'un rotor polarisé, comportant des bobinages et des pôles formés selon un principe analogue à celui décrits pour les modules statoriques, avec des pôles saillants ou non. Il peut encore s'agir d'un rotor polarisé, dont les paires de pôles sont formées par des aimants permanent, avec la possibilité d'avoir des pôles lisses, sans variation de réluctance.

### Description sommaire des figures

La manière de réaliser l'invention, ainsi que les avantages qui en découlent ressortiront bien de la description du mode de réalisation qui suit, à l'appui des figures annexées, dans lesquelles :
La figure 1 est une vue en perspective sommaire d'une machine conforme à l'invention, montrant le châssis du stator partiellement écorché, de manière à laisser apparaître les modules statoriques et le rotor.
La figure 2 est une vue en perspective sommaire d'un module statorique montré sans bobinage, avant mise en place dans la machine de la figure 1.
La figure 3 est une vue en perspective sommaire d'une portion du châssis du stator, avant mise en place du module statorique.
La figure 4 est une vue en perspective sommaire d'un module électronique de contrôle/commande avant mise en place dans le châssis de la machine de la figure 1.
La figure 5 est une vue en perspective sommaire d'un détail d'une paroi du châssis selon une variante de réalisation, montrant un canal de passage de moyens de connexion électrique entre le module statorique, le module de contrôle/commande associé et le système externe d'alimentation et de commande.

Bien entendu, les dimensions et proportions des différents éléments illustrés aux figures ont été choisies pour faciliter la compréhension de l'invention, et peuvent s'écarter de la réalité.

### Manière de réaliser l'invention

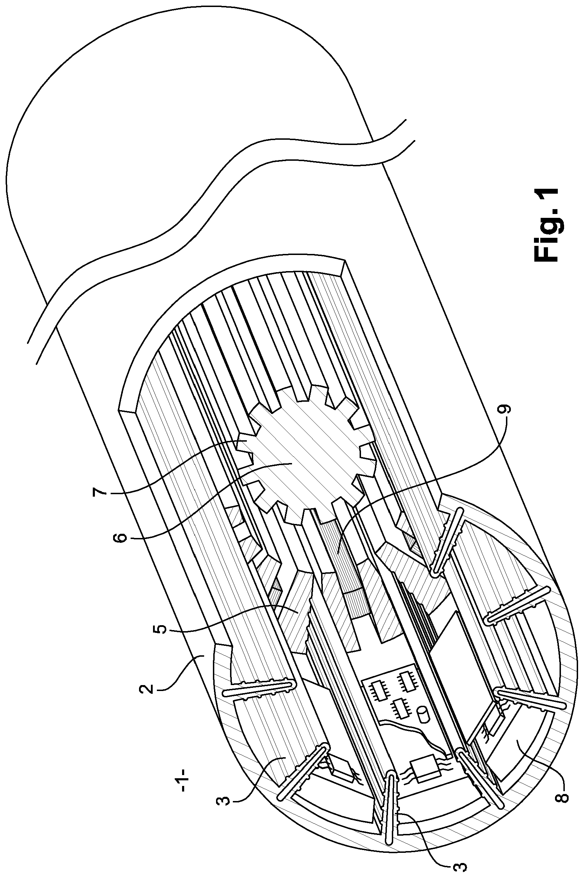

Le moteur 1 illustré à la figure 1 comporte de façon générale un châssis **2** formé à base de profilés, et comportant des parois **3** entre lesquelles sont installés des modules statoriques **5.** Entre ces modules statoriques **5,** se trouve le rotor **6,** qui possède des dents proéminentes **7.** Ainsi, l'exemple illustré correspond à une machine à réluctance variable à pôles rotoriques et statoriques saillants.

Dans la forme illustrée, la longueur du rotor **6** a été réduite, pour laisser apparaître les modules statoriques **5**, et les modules de contrôle/commande **8** qui sont insérés également entre deux parois **3.**

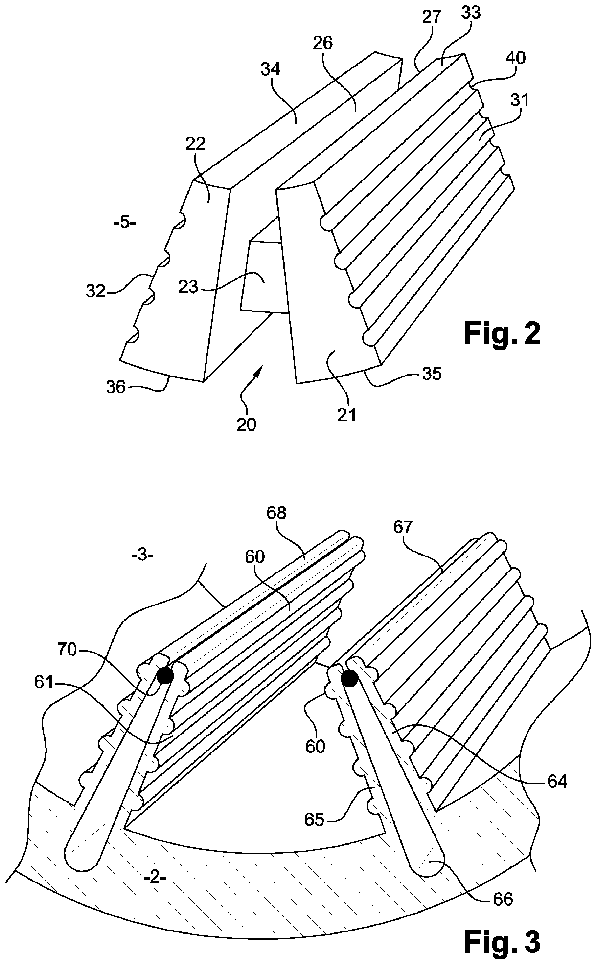

En référence à la figure 2, un module statorique **5** illustré sans bobinage, se compose d'une portion centrale **20** et de deux portions latérales **21, 22.** La portion centrale **20** comporte un noyau **23** autour duquel sera enroulé le bobinage. Ce noyau **23** possède donc une hauteur constante mesurée dans le sens radial. La portion centrale se délimite entre les portions latérales **22,** et plus précisément les faces intérieures **26, 27** de ces portions latérales, qui définissent entre elles le volume destiné à accueillir le bobinage. Ce volume possède donc une section sensiblement rectangulaire qui permet un remplissage optimal par le fil du bobinage en assurant un contact de ce bobinage sur les faces intérieures **26, 27,** en vue de la dissipation de la chaleur au travers des portions latérales **21, 22,** en direction du châssis.

Les portions latérales **21, 22** présentent leurs faces extérieures **31, 32,** qui sont orientées sensiblement radialement, et qui ne sont donc pas parallèles aux faces intérieures **26, 27** des portions correspondantes. Par conséquent, la section de ces portions latérales est légèrement trapézoïdale avec un petit côté formant les pôles **33, 34,** orienté du côté du rotor, qui est plus étroit que le grand côté **35, 36** opposé qui vient au contact du châssis.

Par cette forme trapézoïdale, le champ généré par le bobinage enroulé autour du noyau **23,** et qui est donc orthoradial au sein du noyau **23** est ensuite guidé et concentré au niveau des faces **33, 34** en regard du rotor. On notera que la présence de deux pôles par module permet de refermer le champ par le rotor. Pour faire en sorte que le champ se referme exclusivement par le rotor, on choisira avantageusement de réaliser le châssis en un matériau amagnétique, pour éviter que le champ ne se referme par les portions du module statorique opposées au rotor. On en retirera un avantage en termes de poids.

Conformément à l'invention, les faces extérieures **31, 32** des portions latérales du module statorique **5** présentent des zones en relief **40,** qui dans la forme illustrée sont formées de canaux sensiblement cylindriques, orientés axialement. Ces zones en creux **40** sont destinées à coopérer avec des zones en relief formées sur des parois du châssis, et en particulier des modules **60** tels qu'illustrés à la figure 3.

Le module statorique illustré à la figure 2 peut être réalisé de différentes manières, et par exemple par un empilement de tôles élémentaires, empilées dans le sens axial. Dans le cas d'un empilement de tôles, afin d'utiliser des tôles élémentaires identiques, le bobinage pourra déborder axialement de la partie ferromagnétique du module.

Dans une forme de réalisation alternative préférée, le module statorique peut être réalisé à partir d'un matériau magnétique compressé. Dans ce cas, il est possible de lui donner une forme spécifique, permettant de loger l'intégralité du bobinage à l'intérieur du volume global du module sans que le bobinage ne dépasse axialement.

Dans le cas d'un emploi d'un matériau compressible, il est possible de réaliser des formes courbes plus favorables à un enroulement du bobinage à fil tendu, avec une augmentation de la surface de contact du bobinage sur le noyau **23** du module statorique.

Dans l'une ou l'autre des formes, il est envisageable de combler le volume du module statorique situé au-dessus du bobinage, de manière à ce que le module statorique présente en direction du rotor une surface continue, formant un cylindre dans lequel s'insèrent les surfaces **33, 34** des pôles du module statorique. De manière équivalente, il est possible de concevoir le rotor de telle sorte à obturer le volume situé entre les dents du rotor, de manière à éviter les turbulences aérodynamiques lors de la rotation du rotor et les bruits associés. Ce volume peut être obturé de différentes manières, soit en le comblant avec un matériau amagnétique, soit en ménageant une surface continue, par exemple avec un film enroulé autour du rotor.

Comme déjà évoqué, le module statorique **5** est après bobinage destiné à être inséré entre des parois radiales **3** réalisées sur le châssis **2,** dont une forme de réalisation est illustrée à la figure 3.

Plus précisément, et dans cette forme illustrée, ces parois **3** sont réparties équiangulairement sur la carcasse du châssis **2,** et présentent des faces **61** en regard des faces extérieures **31, 32** du module statorique. Ces parois **3,** et plus précisément leur face principale **61,** possèdent des zones en relief **60** complémentaires des zones en creux **40** du module statorique **5.** Ces zones en relief **60** présentent une forme sensiblement cylindrique formant des lunules bloquant le déplacement radial des modules statoriques. Le nombre, la forme ainsi que le positionnement des lunules peuvent varier en fonction des applications. Ces lunules augmentent également la surface de contact entre les parois et les modules statoriques, permettant de rendre plus efficace la dissipation de chaleur depuis les modules statoriques vers les parois.

Dans le cas où on utilise pour le module statorique des matériaux ferromagnétiques compressés, on privilégie les formes de lunules qui ne possèdent pas d'angles vifs, pour limiter les zones de fragilité dans les matériaux compressés.

L'effet mécanique d'accrochage des zones en relief complémentaire entre les modules statoriques et les parois se double d'une augmentation de la surface d'échange thermique entre le module et la paroi et donc le châssis, ce qui améliore le bilan thermique du moteur.

Dans la forme particulière illustrée à la figure 3, la paroi **3** se compose de deux pans **64, 65** qui sont séparés par un canal **66** allongé radialement. Ce canal **66** débouche à l'extrémité distale de la paroi **3** au niveau d'une ouverture **67** formant une fente sur la face **68** orientée vers le rotor. La largeur de cette fente peut être adaptée pour régler l'amplitude de la déformation élastique de la paroi. Pour refermer le canal **66** au niveau de la fente **67,** un joint compressible **70** peut être inséré. Ce joint assure d'une part, l'étanchéité du canal **66** à l'intérieur duquel peut circuler un fluide de refroidissement, et d'autre part, assure une partie de la raideur et de l'amortissement de la déformation des pans **64, 65** de la paroi. Bien entendu, l'épaisseur du canal **66** et des pans **64, 65** sont déterminées en fonction des niveaux d'efforts exercés.

Cette capacité de déformation des parois **3** dans le sens orthoradial permet d'assurer le maintien axial du module statorique, qui est inséré en force entre deux parois consécutives. Cette capacité de déformation des parois **3** permet également de compenser des écarts dimensionnels dans la fabrication des modules statoriques. De plus, en fonctionnement, l'échauffement des modules statoriques et donc leur dilatation peut être différente de celle du châssis, de sorte que la capacité de déformation des parois permet également de compenser ces écarts de variation dimensionnelle.

Complémentairement, toujours en fonctionnement, chaque module statorique est activé de manière décalée par rapport à ses modules voisins, et est donc l'objet d'efforts localisés. La capacité de déformation des parois permet de compenser partiellement l'effet de ces efforts. L'élasticité de préhension des modules dans le sens orthoradial assure le découplage vibratoire des modules par rapport au châssis, sous l'effet de la variation à haute fréquence des efforts tangentiels subis de la part du rotor.

Comme déjà évoqué, le canal **66** peut être utilisé pour y faire circuler un fluide, liquide ou gazeux, permettant d'assurer l'évacuation de la chaleur produite au niveau des modules, et transmise à travers les pans au contact du module. La forme radiale allongée des canaux **66** permet de récupérer la chaleur sur la quasi-totalité de la hauteur du module statorique. Pour améliorer la capacité d'échange thermique, le canal **66** peut se prolonger radialement à l'intérieur de la carcasse du châssis, dans le but d'augmenter la surface d'échange.

Des agencements classiques tels que des ailettes peuvent être prévus sur le châssis pour assurer l'évacuation de la chaleur dans le milieu ambiant.

Selon un autre aspect de l'invention, le moteur comporte un ensemble d'unités de contrôle/commande qui sont chacune dédiées au fonctionnement d'un module statorique.

Ce module de commande électronique agit de façon classique pour un moteur à réluctance variable par la commande des interrupteurs statiques, qui permettent de laisser passer ou de couper le courant à l'intérieur du bobinage du module, en fonction de la position du rotor.

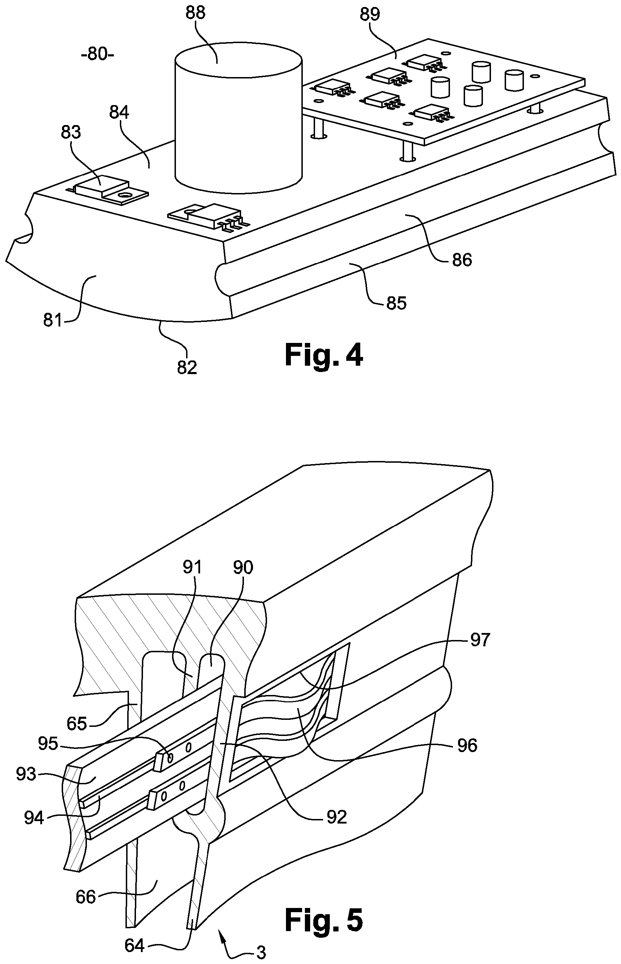

Mécaniquement, et comme illustré à la figure 4, un module **80** est destiné à venir être inséré entre deux parois **3** du châssis **2,** dans l'alignement du module statorique correspondant. Pour ce faire, le module **80** présente une semelle **81,** réalisée en un matériau conducteur, thermiquement, typiquement à base d'aluminium. Cette semelle **81** présente une face à l'extérieur **82** destinée à venir au contact du châssis pour permettre le transfert de la chaleur produite par les composants électroniques de puissance **83** situés sur sa face supérieure **84.** Les faces latérales **85** de la semelle **81** présentent une rainure **86** permettant de recevoir une lunule **60** de la paroi.

Il est toutefois possible que le montage du module électronique **80** se fasse par d'autres moyens, mais l'emploi de moyens identiques à ceux du maintien du module statorique **5** permet d'utiliser des châssis réalisés à partir d'éléments profilés.

En fonction des contraintes d'encombrement, des composants volumineux et en particulier des condensateurs **88** peuvent être installés directement sur la semelle. Une ou plusieurs cartes électroniques formée par des circuits imprimés **89** peuvent être montées sur la semelle, de manière à assurer les fonctions de régulation.

Il est également possible de monter sur ces cartes électroniques, ou sur un autre organe approprié, un capteur destiné à venir détecter la présence d'une dent du rotor, ou de manière plus générale d'un organe prévu à cet effet sur le rotor, de manière à détecter la position angulaire du rotor.

En fonction des contraintes d'encombrement, la ou les cartes électroniques **89** peuvent être disposées à plat sur la semelle **81,** ou encore perpendiculairement à cette dernière, par exemple dans le cas où elles supportent le capteur de position angulaire du rotor.

Outre les fonctions de maintien mécanique et de canalisation du fluide de refroidissement, les parois formant des glissières peuvent avantageusement intégrer les conducteurs assurant l'interconnexion des modules électromagnétiques avec les modules électroniques en regard d'une part, et les modules électroniques avec le jeu de conducteurs d'alimentation continue de la machine et son dispositif de contrôle d'autre part.

La Figure 5 illustre un mode de réalisation possible du système d'interconnexion. Pour ce faire, la paroi **3** comporte comme déjà évoqué un canal de refroidissement **66** formé entre deux pans **64, 65.** Cette paroi **3** comporte également un canal spécifique **90,** séparé du canal de refroidissement **60** par une cloison **91,** et délimité vers l'extérieur par une fraction **92** du pan **64,** sur lequel se trouvent les lunules **60**. .Ce canal spécifique **90** accueille un circuit électrique planaire, pouvant avantageusement être formé d'un circuit imprimé **93.** Ce circuit imprimé **93** peut être maintenu dans le canal **90** au moyen de deux rainures axiales (non représentées). Une fenêtre **97** pratiquée dans la face **92** permet la traversée des conducteurs. En vue de permettre une insertion et un démontage aisés des modules, le contact électrique est assuré au moyen d'un jeu de contacts électriques, par exemple des lames souples **96** connectées aux pistes conductrices **94** cheminant sur le circuit intégré **93.** Ces lames souples **96** sont situées en regard des terminaisons électriques des modules électromagnétiques ou électroniques insérés entre les parois **3.** Autant de points de contact que nécessaires sont utilisés pour transmettre les signaux de puissance et/ou de contrôle. Cela concerne en particulier la connexion entre un module statorique et le module de contrôle/commande associé, pour assurer par exemple l'interconnexion des deux pôles de la bobine avec les sorties du module électronique correspondant. Cela concerne également la connexion entre les modules de contrôle/commande et le système externe d'alimentation et de commande, et par exemple des circuits assurant l'alimentation en courant continu des modules électronique de contrôle/commande. Dans ce dernier cas, les conducteurs axiaux cheminant dans l'évidement **90,** et débouchant à l'extrémité de la machine, peuvent être avantageusement collectés au moyen d'un circuit planaire, et par exemple sous forme d'un circuit imprimé, en forme d'anneau appliqué contre un des flasques du moteur.

On notera que pour le système de refroidissement, un principe similaire peut être utilisé pour assurer l'interconnexion hydraulique ou aéraulique des différents canaux axiaux dans lesquels circule le fluide de refroidissement. Les flasques de la machine supportant les paliers du rotor, peuvent être ainsi munis de cavités creusées dans leur épaisseur et permettant de relier et d'alimenter, en série ou en parallèle, l'ensemble des canaux axiaux de refroidissement.

Il ressort de ce qui précède que le moteur conforme à l'invention présente de multiples avantages, et en particulier celui d'assurer un découplage de fonctionnements de chacune des phases, tant sur le plan électrique, magnétique et mécanique que de sa commande électronique. L'autonomie de chacune des phases permet d'augmenter la fiabilité et facilite la maintenance. La conception de ce moteur permet d'augmenter les fréquences de travail, ainsi que le nombre de phases. Ce dernier point, combiné au découplage vibratoire que procure l'élasticité orthoradiale du système de fixation des modules sur le châssis, permet d'assurer un lissage du couple, dont la variation dans le temps et les vibrations associées constituent un des points négatifs des moteurs à réluctance variable.

Du fait que la carcasse du châssis n'est pas en matériau magnétique, on rend également possible des gains de poids. Le choix approprié du matériau utilisé pour la réalisation de la carcasse du châssis, avantageusement un alliage d'aluminium, permet de réduire le poids de la machine. Cette amélioration des performances massiques de la machine est également renforcée par les conditions de refroidissement très favorables du stator, grâce à l'extraction « à coeur » de la chaleur à travers les parois du système de maintien des modules. Ainsi, comparée aux structures de stator classiques, dans lesquelles les bobinages sont enroulés autour de plots radiaux issus d'une culasse périphérique, l'architecture proposée permet une augmentation significative de la densité du courant au sein des bobinages pour un même échauffement. Enfin la conception modulaire du stator, associée au maintien collectif de ses éléments actifs électromagnétiques et électroniques au moyen d'un châssis extrudé monobloc intégrant les fonctions de maintien mécanique, de refroidissement, voire d'interconnexion électrique, offre la possibilité d'une fabrication partiellement ou totalement automatisée.

### Applications industrielles

De par sa conception, ce moteur se trouve particulièrement avantageux pour les applications requérant un niveau de puissance relativement important, pouvant aller jusqu'à quelques centaines de kilowatts, et ce avec une compacité élevée. Il peut donc être employé en différentes applications dans des domaines de la traction, et en particulier automobile. Compte tenu de sa réversibilité de fonctionnement, il peut également être utilisé comme générateur, pour constituer par exemple une unité de production d'électricité en association avec un moteur thermique. La simplicité de constitution de son rotor denté pour former une machine à réluctance variable, combinée à la possibilité de travailler à haute fréquence grâce à l'architecture de stator proposée, permet en particulier la réalisation de groupes électrogènes à grandes vitesses de rotation.

## Revendications

1. Machine électrique (1), dont le stator comporte un châssis (2), et une pluralité de modules statoriques (5) répartis équiangulairement sur ledit châssis (2), chaque module (5) comportant un bobinage (9) susceptible de générer un champ magnétique, chaque module statorique (5) comportant :
▪ une portion centrale (20) sur laquelle est enroulée orthoradialement ledit bobinage (9) ;
▪ deux portions latérales (21, 22) formant chacune un pôle (33, 34) orienté vers le rotor, ledit châssis (2) comportant une pluralité de parois radiales (3) coopérant avec les faces extérieures (31, 32) des portions latérales (21, 22) desdits modules statoriques pour leur maintien en position, ladite machine électrique (1) étant **caractérisée en ce que** les parois radiales (3) comportent un évidement central s'étendant sur tout ou partie de leurs longueurs **et en ce que** les parois radiales offrent une bonne stabilité mécanique grâce à leur possibilité de déformation dans le sens orthoradial, la présence dudit évidement central garantissant une flexibilité mécanique et offrant un espace permettant à un fluide de circuler à l'intérieur des parois radiales.

2. Machine électrique selon la revendication 1, **caractérisée en ce que** les parois (3) comportent au moins une zone en relief (60), coopérant avec une zone en relief complémentaire (40) présente sur la face externe (31) en regard d'un module statorique (5).

3. Machine électrique selon la revendication 2, **caractérisée en ce que** la zone en relief (60) forme une excroissance présente sur la paroi (3).

4. Machine électrique selon la revendication 2, **caractérisée en ce que** la zone en relief (60) présente une forme courbe.

5. Machine électrique selon la revendication 1, **caractérisée en ce que** l'évidement central se prolonge au-delà de la paroi (3) à l'intérieur du châssis (2).

6. Machine électrique selon la revendication 1, **caractérisée en ce que** l'évidement (66) est ouvert en direction de l'extrémité distale de la paroi, l'ouverture (67) de l'évidement (66) étant comblé par un matériau compressible (70).

7. Machine électrique selon la revendication 1, **caractérisée en ce que** les deux portions latérales (21, 22) des modules statoriques (5) présentent leur face intérieure (26, 27) qui sont parallèles et perpendiculaires à l'axe d'enroulement du bobinage (9).

8. Machine électrique selon la revendication 7, **caractérisée en ce que** le bobinage vient au contact des faces intérieures (26, 27) des portions latérales (21, 22) des modules statoriques (5).

9. Machine électrique selon la revendication 1, **caractérisée en ce qu'**il comporte un dispositif de contrôle/commande (80) dédié à chaque module statorique, chaque dispositif de contrôle/commande étant maintenu en position entre deux parois (3) maintenant les modules statoriques (5), disposé en décalage axial par rapport au module statorique (5) qu'il commande.

10. Machine électrique selon la revendication 9, **caractérisée en ce que** le dispositif de contrôle/commande comporte une semelle (81) au contact du châssis (2), ladite semelle recevant des composants électroniques (83) au travers desquels transite le courant circulant dans le bobinage (9) du module statorique (5).

11. Machine électrique selon la revendication 1, **caractérisée en ce que** chaque dispositif de contrôle/commande comporte au moins un circuit imprimé (89) monté parallèlement ou perpendiculairement à la face supérieure (84) de la semelle (81).

12. Machine électrique selon la revendication 1, **caractérisée en ce que** les parois (3) incluent des organes (93) de connexion électrique entre les dispositifs de contrôle commande (80), les modules statoriques (5) et le système externe d'alimentation et de commande.

## Patentansprüche

1. Eine elektrische Maschine (1), deren Stator ein Chassis (2) und mehrere Statormodule (5) umfasst, die auf diesem Chassis (2) in gleichen Winkeln angeordnet sind, wobei jedes Modul (5) eine Wicklung (9) umfasst, die ein Magnetfeld erzeugen kann, jedes Statormodul (5) umfasst dabei:
▪ einen zentralen Abschnitt (20), auf den diese Wicklung (9) orthoradial gewickelt ist;
▪ zwei Seitenteile (21, 22), die jeweils einen zum Rotor ausgerichteten Pol (33, 34) bilden,
wobei das Chassis (2) mehrere radiale Wände (3) umfasst, die mit den Außenflächen (31, 32) der Seitenteile (21, 22) dieser Statormodule zusammenwirken, um sie in Position zu halten, diese elektrische Maschine (1) ist **dadurch gekennzeichnet, dass** diese radialen Wände (3) eine Aussparung enthalten, die über ihre gesamte oder einen Teile ihrer Länge erstreckt, und **dadurch, dass** die radialen Wände dank ihrer Verformbarkeit in orthoradialer Richtung eine gute mechanische Stabilität bieten, das Vorhandensein dieser zentralen Aussparung garantiert eine mechanische Flexibilität und bietet einen Raum, in dem eine Flüssigkeit im Inneren der radialen Wände zirkulieren kann.

2. Elektrische Maschine nach Anspruch 1, **dadurch gekennzeichnet, dass** die Wände (3) mindestens eine erhöhte Zone (60) enthalten, die mit einer komplementären erhöhten Zone (40) zusammenarbeitet, die sich auf der Außenfläche (31) gegenüber einem Statormodul (5) befindet.

3. Elektrische Maschine nach Anspruch 2, **dadurch gekennzeichnet, dass** die erhöhte Zone (60) eine auf der Wand (3) befindliche Auskragung bildet.

4. Elektrische Maschine nach Anspruch 2, **dadurch gekennzeichnet, dass** die erhöhte Zone (60) eine Kurvenform aufweist.

5. Elektrische Maschine nach Anspruch 1, **dadurch gekennzeichnet, dass** die zentrale Aussparung sich über die Wand (3) im Inneren des Rahmens (2) hinaus erstreckt.

6. Elektrische Maschine nach Anspruch 1, **dadurch gekennzeichnet, dass** die Aussparung (66) in Richtung des distalen Endes der Wand offen ist, die Öffnung (67) der Aussparung (66) wird dabei durch ein komprimierbares Material (70) ausgefüllt.

7. Elektrische Maschine nach Anspruch 1, **dadurch gekennzeichnet, dass** die beiden Seitenteile (21, 22) der Statormodule (5) ihre Innenseite zeigen (26, 27), die parallel und senkrecht zur Wicklungsachse der Wicklung sind (9).

8. Elektrische Maschine nach Anspruch7, **dadurch gekennzeichnet, dass** die Wicklung Kontakt zu den Innenseiten (26, 27) der Seitenteile (21, 22) der Statormodule (5) hat.

9. Elektrische Maschine nach Anspruch 1, **dadurch gekennzeichnet, dass** sie eine Kontroll-/ Steuervorrichtung (80) für jedes einzelne Statormodul hat, jede Kontroll-/ Steuervorrichtung wird dabei zwischen zwei Wänden (3) in Position gehalten, die die Statormodule (5) halten, axial versetzt angeordnet, bezogen auf das Statormodul (5), das sie steuert.

10. Elektrische Maschine nach Anspruch 9, **dadurch gekennzeichnet, dass** die Kontroll-/ Steuervorrichtung eine Grundplatte (81) enthält, die Kontakt mit dem Rahmen (2) hat, diese Grundplatte nimmt die elektronischen Bauteile (83) auf, durch die der in der Wicklung (9) des Statormoduls (5) zirkulierende Strom fließt.

11. Elektrische Maschine nach Anspruch 1, **dadurch gekennzeichnet, dass** jede Kontroll-/ Steuervorrichtung mindestens eine Leiterplatte (89) enthält, die parallel oder senkrecht zur oberen Fläche (84) der Grundplatte (81) montiert ist.

12. Elektrische Maschine nach Anspruch 1, **dadurch gekennzeichnet, dass** die Wände (3) elektrische Verbindungsaggregate (93) zwischen den Kontroll-/ Steuervorrichtungen (80), den Statormodulen (5) und dem externen Versorgungs- und Steuersystem umfassen.

## Claims

1. Electrical machine (1), the stator whereof comprises a chassis (2), and a plurality of stator modules (5) arranged on said chassis (2) at equal angles, each module (5) comprising a winding (9) capable of generating a magnetic field, each stator module (5) comprising:
• a central portion (20) on which said winding (9) is orthoradially wound;
• two side portions (21, 22), each forming a pole (33, 34) oriented towards the rotor,
said chassis (2) comprising a plurality of radial walls (3) cooperating with the outer faces (31, 32) of the side portions (21, 22) of said stator modules to hold them in position, said electrical machine (1) being **characterised in that** the radial walls (3) comprise a central recess extending over all or part of the lengths thereof and **in that** the radial walls procure a good mechanical stability thanks to the possibility thereof of becoming deformed in the orthoradial direction, the presence of said central recess guaranteeing a mechanical flexibility and procuring a space allowing a fluid to flow within the radial walls.

2. Electrical machine according to claim 1, **characterised in that** the walls (3) comprise at least one raised area (60), cooperating with a complementary raised area (40) present on the outer face (31) facing a stator module (5).

3. Electrical machine according to claim 2, **characterised in that** the raised area (60) forms a protuberance present on the wall (3).

4. Electrical machine according to claim 2, **characterised in that** the raised area (60) has a curved shape.

5. Electrical machine according to claim 1, **characterised in that** the central recess extends beyond the wall (3) inside the chassis (2).

6. Electrical machine according to claim 1, **characterised in that** the recess (66) is open in the direction of the distal end of the wall, the opening (67) of the recess (66) being filled by a compressible material (70).

7. Electrical machine according to claim 1, **characterised in that** the inner faces (26, 27) of the two side portions (21, 22) of the stator modules (5) are parallel and perpendicular to the winding axis of the winding (9).

8. Electrical machine according to claim 7, **characterised in that** the winding comes into contact with the inner faces (26, 27) of the side portions (21, 22) of the stator modules (5).

9. Electrical machine according to claim 1, **characterised in that** it comprises an instrumentation and control device (80) dedicated to each stator module, each instrumentation and control device being held in position between two walls (3) holding the stator modules (5), disposed such that it is axially offset relative to the stator module (5) controlled thereby.

10. Electrical machine according to claim 9, **characterised in that** the instrumentation and control device comprises a base (81) in contact with the chassis (2), said base receiving electronic components (83) through which transits the current flowing inside the winding (9) of the stator module (5).

11. Electrical machine according to claim 1, **characterised in that** each instrumentation and control device comprises at least one printed circuit board (89) mounted parallel or perpendicular to the top face (84) of the base (81).

12. Electrical machine according to claim 1, **characterised in that** the walls (3) include electrical connection members (93) between the instrumentation and control devices (80), the stator modules (5) and the external power and control system.
